# EUROPEAN PATENT APPLICATION

(11) **EP 4 459 637 A1**
(43) Date of publication of application: **06.11.2024**
(21) Application number: 22915770.6
(22) Date of filing: 16.12.2022
(51) Int. Cl.: H01B 1/06, H01B 1/08, H01B 13/00, H01M 10/054, H01M 10/0562

(54) **SOLID ELECTROLYTE SHEET AND METHOD FOR PRODUCING SAME**

(30) Priority: 27.12.2021 JP 2021211976
(71) Applicant: Nippon Electric Glass Co., Ltd., Otsu-shi, Shiga 520-8639 (JP)
(72) Inventor: IKEJIRI, Junichi, Otsu-shi Shiga 520-8639 (JP); YAMAUCHI, Hideo, Otsu-shi Shiga 520-8639 (JP); YAMAZAKI, Yoshinori, Otsu-shi Shiga 520-8639 (JP)
(74) Representative: Tetzner, Michael
(86) International application number: PCT/JP2022/046396
(87) International publication number: WO 2023/127546

(57) **Abstract**

Provided is a beta-alumina-based solid electrolyte sheet capable of increasing the first charge and discharge capacities and rapid charge and discharge characteristics of an all-solid-state sodium secondary battery. A solid electrolyte sheet contains β-alumina and/or β"-alumina and satisfies C₁ > C₂ where C₁ represents a concentration of Na₂O in a surface of the solid electrolyte sheet and C₂ represents a concentration of Na₂O in a middle of a thickness direction of the solid electrolyte sheet.

## Description

### [Technical Field]

The present invention relates to beta-alumina-based solid electrolyte sheets for use in power storage devices, such as sodium-ion secondary batteries, and methods for producing the same.

### [Background Art]

Lithium-ion secondary batteries have secured their place as high-capacity and light-weight power sources essential for mobile devices, electric vehicles, and so on. However, current lithium-ion secondary batteries employ as their electrolytes, mainly, combustible organic electrolytic solutions, which raises concerns about the risk of burning or explosion. As a solution to this problem, all-solid-state lithium-ion batteries using a solid electrolyte instead of an organic electrolytic solution have been under development (see, for example, Patent Literature 1).

However, as for lithium, there is concern about global rise in raw and processed material costs. To cope with this, sodium has attracted attention as a material to replace lithium and beta-alumina-based solid electrolytes, including β-alumina and β"-alumina, are used as solid electrolytes.

In relation to all-solid-state sodium-ion secondary batteries, by reducing the thickness of the solid electrolyte (forming the solid electrolyte into a sheet), the energy density per unit volume can be increased. Furthermore, by doing so, the resistance to sodium ion migration in the battery is reduced and, therefore, improvement in rate characteristics can be expected.

### [Citation List]

### [Patent Literature]

[PTL 1]
   JP-A-H05-205741
[PTL 2]
   JP-A-2010-15782

### [Summary of Invention]

### [Technical Problem]

When a conventional beta-alumina-based solid electrolyte sheet is used in an all-solid-state sodium secondary battery, the irreversible capacity is high and, therefore, the first charge and discharge capacities tend to be poor. In addition, the rapid charge and discharge characteristics also tend to be poor.

In view of the foregoing, the present invention has an object of providing a beta-alumina-based solid electrolyte sheet capable of increasing the first charge and discharge capacities and rapid charge and discharge characteristics of an all-solid-state sodium secondary battery.

### [Solution to Problem]

A solid electrolyte sheet according to the present invention is a solid electrolyte sheet containing β-alumina and/or β"-alumina and satisfies C₁ > C₂ where C₁ represents a concentration of Na₂O in a surface of the solid electrolyte sheet and C₂ represents a concentration of Na₂O in a middle of a thickness direction of the solid electrolyte sheet.

By doing so, an irreversible capacity in the negative electrode of the all-solid-state sodium secondary battery caused by a first charge-discharge reaction can be cancelled and, therefore, the first charge-discharge efficiency can be increased. Specifically, even when sodium ions conducted from the positive electrode to the negative electrode by the first charge-discharge reaction are taken up in the negative electrode and held unreleased therefrom (in the case of occurrence of an irreversible capacity), sodium ions are released, instead of those in the negative electrode, from Na₂O contained in the surface of the solid electrolyte sheet and, therefore, the irreversible capacity can be cancelled. Furthermore, since an Na₂O-rich phase is present in the surface of the solid electrolyte sheet, a sodium ion-conducting path can be easily formed at the interface between the electrode layer and the solid electrolyte sheet, which improves the rate characteristics and makes it possible to increase the rapid charge and discharge characteristics.

The solid electrolyte sheet according to the present invention preferably satisfies C₁-C₂ ≥ 0.1% by mole.

The solid electrolyte sheet according to the present invention preferably has a thickness of 500 µm or less.

The solid electrolyte sheet according to the present invention preferably contains, in terms of % by mole, 65 to 98% Al₂O₃, 2 to 20% Na₂O, 0.3 to 15% MgO+Li₂O, 0 to 20% ZrO₂, and 0 to 5% Y₂O₃.

The solid electrolyte sheet according to the present invention is preferably used in an all-solid-state sodium-ion secondary battery.

An all-solid-state sodium secondary battery according to the present invention includes the above-described solid electrolyte sheet.

A method for producing a solid electrolyte sheet according to the present invention is a method for producing any one of the above-described solid electrolyte sheets and includes the steps of: preparing a precursor sheet containing α-alumina; and coating a surface of the precursor sheet with an Na-containing material and then firing the precursor sheet. By doing so, a solid electrolyte sheet having a higher concentration of Na₂O in the sheet surface than that in the middle of the thickness direction of the sheet can be obtained.

Generally, it is difficult to produce a thin beta-alumina-based solid electrolyte sheet. For example, when it is produced by the green sheet method using a raw material powder of beta-alumina, the planarity of the solid electrolyte sheet deteriorates due to contraction during firing, which invites a problem of ease of crack generation during production of an all-solid-state battery. Polishing is conceivable as another means for reducing the thickness, but, as for the beta-alumina-based solid electrolyte, dry polishing need to be performed because the beta-alumina-based solid electrolyte is decreased in ionic conductivity by moisture absorption. However, dry polishing is likely to apply great stress on the solid electrolyte sheet and the thinner the thickness, the more likely cracks are to be generated. Furthermore, during firing of the green sheet, Na component tends to vaporize to precipitate heterogeneous crystals containing no Na, such as MgAl₂O₄. Thus, the rate characteristics tend to decrease due to decrease in ionic conductivity and lack of Na.

On the other hand, in the production method according to the present invention, a precursor sheet containing α-alumina is first prepared and then allowed to react with an Na-containing material to turn the α-alumina into beta-alumina, thus producing a beta-alumina-based solid electrolyte sheet. The α-alumina-containing sheet is free from the problem of deterioration in characteristics due to moisture absorption, can be therefore wet-polished, and can be easily reduced in thickness . Hence, by polishing the α-alumina-containing sheet to reach a desired thickness and then turning the α-alumina into beta-alumina, a thin beta-alumina-based solid electrolyte sheet can be easily produced.

In the method for producing a solid electrolyte sheet according to the present invention, the Na-containing material preferably contains Na₂CO₃.

### [Advantageous Effects of Invention]

The present invention enables provision of a beta-alumina-based solid electrolyte sheet capable of increasing the first charge and discharge capacities and rapid charge and discharge characteristics of an all-solid-state sodium secondary battery.

### [Brief Description of Drawings]

[Fig. 1]

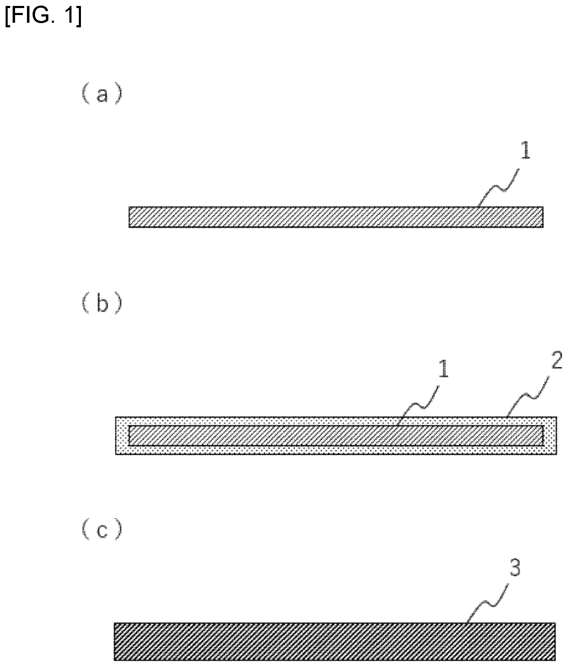

Fig. 1 is a schematic cross-sectional view showing an embodiment of a method for producing a solid electrolyte sheet according to the present invention.

### [Description of Embodiments]

A solid electrolyte sheet according to the present invention is a solid electrolyte sheet containing β-alumina and/or β"-alumina and satisfies C₁ > C₂ where C₁ represents the concentration of Na₂O in a surface of the solid electrolyte sheet and C₂ represents the concentration of Na₂O in the middle of the thickness direction of the solid electrolyte sheet. Thus, as described previously, each characteristics of the first charge-discharge efficiency and rapid charge and discharge characteristics of an all-solid-state sodium secondary battery using the solid electrolyte sheet can be increased. C₁-C₂ is preferably 0.1% by mole or more, more preferably 0.2% by mole or more, even more preferably 0.3% by mole or more, and particularly preferably 0.4% by mole or more. The upper limit of the C₁-C₂ is not particularly limited, but is, actually, preferably not more than 3% by mole, more preferably not more than 2% by mole, and particularly preferably not more than 1% by mole.

The solid electrolyte sheet according to the present invention contains β-alumina and/or β"-alumina and a specific example of the composition is a composition containing, in terms of % by mole, 65 to 98% Al₂O₃, 2 to 20% Na₂O, 0.3 to 15% MgO+Li₂O, 0 to 20% ZrO₂, and 0 to 5% Y₂O₃. The reasons why the composition is limited as just described will be described below.

Al₂O₃ is a main constituent of β-alumina and/or β"-alumina. The content of Al₂O₃ is preferably 65 to 98% and particularly preferably 70 to 95%. If Al₂O₃ is too little, the ionic conductivity of the solid electrolyte sheet is likely to decrease. On the other hand, if Al₂O₃ is too much, α-alumina having no sodium-ion conductivity remains in the solid electrolyte sheet and, therefore, the ionic conductivity of the solid electrolyte sheet is likely to decrease.

Na₂O is a component that gives sodium-ion conductivity to the solid electrolyte sheet. The content of Na₂O is preferably 2 to 20%, more preferably 3 to 18%, and particularly preferably 4 to 16%. If Na₂O is too little, the above effect is difficult to achieve. On the other hand, if Na₂O is too much, surplus Na₂O forms a compound not contributing to ionic conductivity, such as NaAlO₂, and, therefore, the ionic conductivity of the solid electrolyte sheet is likely to decrease.

MgO and Li₂O are components (stabilizers) that stabilize the structures of β-alumina and/or β"-alumina. The content of MgO+Li₂O (the total content of MgO and Li₂O) is preferably 0.3 to 15%, more preferably 0.5 to 10%, and particularly preferably 0.8 to 8%. If MgO+Li₂O is too little, α-alumina remains in the solid electrolyte sheet and, therefore, the ionic conductivity is likely to decrease. On the other hand, if MgO+Li₂O is too much, MgO or Li₂O having not functioned as a stabilizer remains in the solid electrolyte sheet and, therefore, the ionic conductivity is likely to decrease. The content of each of MgO and Li₂O is preferably 0 to 15%, more preferably 0.3 to 15%, even more preferably 0.5 to 10%, and particularly preferably 0.8 to 8%.

ZrO₂ and Y₂O₃ have the effect of suppressing abnormal grain growth of β-alumina particles and/or β"-alumina particles during firing in a production method to be described hereinafter and thus increasing the adhesion between β-alumina particles and/or β"-alumina particles. As a result, the ionic conductivity of the solid electrolyte sheet can be easily increased. The content of ZrO₂ is preferably 0 to 15%, more preferably 1 to 13%, and particularly preferably 2 to 10%. The content of Y₂O₃ is preferably 0 to 5%, more preferably 0.01 to 4%, and particularly preferably 0.02 to 3%. If ZrO₂ or Y₂O₃ is too much, the amount of formation of β-alumina and/or β"-alumina decreases and, therefore, the ionic conductivity of the solid electrolyte sheet is likely to decrease.

Examples of β-alumina include (Al_{10.35}Mg_{0.65}O₁₆) (Na_{1.65}O), (Al_{10.37}Mg_{0.63}O₁₆) (Na_{1.63}O), NaAl₁₁O₁₇, and (Al_{10.32}Mg_{0.68}O₁₆) (Na_{1.68}O), all of which are hexagonal crystals. Examples of β"-alumina include (Al_{10.35}Mg_{0.65}O₁₆) (Na_{1.65}O), (Al_{8.87}Mg_{2.13}O₁₆) (Na_{3.13}O), Na_{1.67}Mg_{0.67}Al_{10.33}O₁₇, Na_{1.49}Li_{0.25}Al_{10.75}O₁₇, Na_{1.72}Li_{0.3}Al_{10.66}O₁₇, and Na_{1.6}Li_{0.34}Al_{10.66}O₁₇, all of which are trigonal crystals.

A solid electrolyte sheet having a smaller thickness is preferred because the distance taken for ionic conduction in the solid electrolyte is shorter and, therefore, its ionic conductivity becomes higher. In addition, the energy density per unit volume in an all-solid-state battery can be more increased. Specifically, the thickness of the solid electrolyte sheet according to the present invention is preferably 500 µm or less, 300 µm or less, 100 µm or less, 50 µm or less, 20 µm or less, 15 µm or less, 7 µm or less, or 5 µm or less. However, if the thickness of the solid electrolyte sheet is too small, the mechanical strength may decrease and a short-circuit may occur between the positive electrode and the negative electrode. Therefore, the thickness is preferably not less than 0.5 µm, not less than 1 µm or not less than 3 µm.

The surface of the solid electrolyte sheet is preferably formed of a porous solid electrolyte layer having three-dimensionally continuous voids. Thus, in forming an electrode layer on the porous solid electrolyte layer, a constituent material of the electrode layer can easily enter the voids in the porous solid electrolyte layer, which facilitates strong adhesion between the electrode layer and the solid electrolyte sheet. Therefore, the contact area between the electrode layer and the solid electrolyte sheet increases and, thus, the interfacial resistance between the electrode layer and the solid electrolyte layer can be reduced. In addition, in the firing process during production of an all-solid-state battery, the anchoring effect works to make it harder for the electrode layer to peel off from the solid electrolyte layer. As a result, an all-solid-state battery having an excellent discharge capacity can be obtained. Although only one surface of the solid electrolyte sheet may be formed of a porous solid electrolyte layer, both the surfaces of the solid electrolyte sheet are preferably formed of respective porous solid electrolyte layers.

The thickness of the porous solid electrolyte layer is preferably 499.5 µm or less, 499 µm or less, 497 µm or less, 490 µm or less, 450 µm or less, 400 µm or less, or 300 µm or less, and particularly preferably 150 µm or less. If the thickness of the porous solid electrolyte layer is too large, it is difficult to fully fill the voids in the porous solid electrolyte layer with the electrode layer material and, therefore, the energy density per unit volume tends to be low. In addition, the amount of contraction during formation of the porous solid electrolyte layer becomes large, which makes a portion of the porous solid electrolyte layer easily peeled off. On the other hand, if the thickness of the porous solid electrolyte layer is too small, the amount of constituent material of the electrode layer entering the voids in the porous solid electrolyte layer becomes small and, therefore, the contact area between the electrode layer and the solid electrolyte sheet becomes small, which is likely to decrease the adhesion between the electrode layer and the solid electrolyte sheet. In this case, the ion-conducting path at the interface between the electrode layer and the solid electrolyte sheet becomes fewer, which tends to increase the internal resistance of the battery. As a result, the rapid charge and discharge characteristics are likely to decrease. Therefore, the thickness of the porous solid electrolyte layer is preferably not less than 10 µm, more preferably not less than 30 µ, and particularly preferably not less than 50 µm.

Next, a description will be given of a method for producing a solid electrolyte sheet according to the present invention. Fig. 1 is a schematic cross-sectional view showing an embodiment of a method for producing a solid electrolyte sheet according to the present invention. First, a precursor sheet 1 containing α-alumina is prepared (Fig. 1(a)). Next, the surface of the precursor sheet 1 is coated with an Na-containing material 2 (Fig. 1(b)). Then, the precursor sheet 1 coated with the Na-containing material 2 is fired and, thus, a beta-alumina-based solid electrolyte sheet 3 can be obtained (Fig. 1 (c)).

The precursor sheet containing α-alumina can be produced, for example, by the green sheet method. A specific method thereof is as follows.

First, a binder, a plasticizer, a solvent, and so on are added to a raw material powder containing α-alumina and the mixture is kneaded to form a slurry. The raw material powder may contain, other than α-alumina, components of beta-alumina, such as Na, Mg or Li.

The solvent may be water or any organic solvent, such as ethanol or acetone. However, when water is used as the solvent, the sodium component may be dissolved out of the raw material powder to increase the pH of the slurry and agglomerate the raw material powder. Therefore, an organic solvent is preferably used.

Next, the obtained slurry is applied to a base material made of PET (polyethylene terephthalate) or so on and then dried, thus obtaining a green sheet. The application of the slurry can be done with a doctor blade, a die coater or so on. The thickness of the green sheet is preferably 0.01 to 1 mm and particularly preferably 0.02 to 0.9 mm. If the thickness of the green sheet is too small, the mechanical strength of the solid electrolyte sheet may decrease and a short-circuit may occur between the positive electrode and the negative electrode. On the other hand, if the thickness of the green sheet is too large, the solid electrolyte sheet becomes thick, which increases the distance taken for ionic conduction and, therefore, is likely to decrease the energy density per unit cell.

Then, the green sheet is fired, thus obtaining a precursor sheet containing α-alumina. The firing temperature is not particularly limited so long as it is a temperature that enables provision of a dense sintered body, but the firing temperature is, for example, preferably 1400 to 1800°C and particularly preferably 1600 to 1750°C. The firing time is appropriately adjusted to sufficiently sinter α-alumina. Specifically, the firing time is preferably 10 to 120 minutes and particularly preferably 20 to 80 minutes.

When the green sheet is subjected to pressing, such as isotropic pressing, prior to the firing, the denseness of the α-alumina-containing precursor sheet after being fired can be increased and, as a result, the denseness of a beta-alumina-based solid electrolyte sheet as a final product can be increased later.

If necessary, the obtained precursor sheet may be subjected to polishing or so on to reduce the thickness. The precursor sheet containing α-alumina is, unlike a sheet made of beta-alumina, free from the problem of deterioration in characteristics due to moisture absorption, can be therefore wet-polished, and can be easily reduced in thickness. Hence, when the precursor sheet containing α-alumina is reduced in thickness by wet polishing, a beta-alumina-based solid electrolyte sheet as a final product can also be reduced in thickness.

Alternatively, in addition to the above green sheet, a green sheet for a porous layer may be obtained by adding an organic vehicle containing a binder to a mixed powder containing an α-alumina-containing raw material powder and a polymer powder to make a slurry, applying the slurry to a base material, and then drying the slurry. The production process of the green sheet for a porous layer is different from the production process of the aforementioned green sheet for the α-alumina precursor only in that the polymer powder is added as a solid content, and the rest can be performed employing the same materials and manners.

The polymer powder is a material used for the purpose of forming voids in a porous layer by being burned off in the later firing process. Examples of the polymer powder include acrylic resin, polyacrylonitrile, polymethacrylonitrile, and polystyrene.

The average particle diameter (D₅₀) of the polymer powder is preferably 0.1 to 100 µm, more preferably 1 to 80 µm, even more preferably 5 to 70 µm, and particularly preferably 10 to 50 µm. If the average particle diameter of the polymer powder is too small, three-dimensionally continuous voids are difficult to form in the porous layer. On the other hand, if the average particle diameter of the polymer powder is too large, the sintering of the porous layer becomes insufficient, which tends to decrease the ionic conductivity and, as a result, decrease the rate characteristics.

The content ratio between the α-alumina-containing raw material powder and the polymer powder is, in terms of volume ratio, preferably 75:25 to 3:97, more preferably 60:40 to 6:94, and even more preferably 40:60 to 9:91. If the content of the polymer powder is too small, three-dimensionally continuous voids are difficult to form in the porous layer. On the other hand, if the content of the polymer powder is too large, the sintering of the porous layer becomes insufficient, which tends to decrease the ionic conductivity and, as a result, decrease the rate characteristics.

The content ratio between the α-alumina-containing raw material powder and the polymer powder is, in terms of mass ratio, preferably 95:5 to 20:80, more preferably 90:10 to 30:70, and even more preferably 80:20 to 40:60. The reason why the content ratio is limited like this is as described above.

The green sheet for a porous layer may be layered on one or both sides of the previously obtained green sheet made of α-alumina-containing raw material powder to obtain a laminate. In this case, it is preferred that after the green sheets are layered, the laminate is subjected to pressing (preferably hot pressing). By doing so, the adhesion between adjacent green sheets can be increased.

When the laminate is fired, an α-alumina-containing precursor sheet can be produced the surface of which is formed of a porous solid electrolyte layer having three-dimensionally continuous voids. The firing temperature is not particularly limited, but is, for example, preferably 1400 to 1800°C and particularly preferably 1600 to 1750°C. The firing time is appropriately adjusted to sufficiently sinter α-alumina. Specifically, the firing time is preferably 10 to 120 minutes and particularly preferably 20 to 80 minutes.

If the thickness of the α-alumina-containing precursor sheet is too large, turning from α-alumina into beta-alumina does not sufficiently progress in the thickness direction during reaction with the Na-containing material in the later process, which makes it difficult to obtain a desired beta-alumina-based solid electrolyte sheet. In addition, the thickness of the beta-alumina-based solid electrolyte sheet as a final product tends to be excessively large. Therefore, the thickness of the α-alumina-containing precursor sheet is preferably 500 µm or less, 300 µm or less, or 100 µm or less, and particularly preferably 50 µm or less, 20 µm or less, 15 µm or less, 7 µm or less, or 5 µm or less. However, if the thickness of the α-alumina-containing precursor sheet is too small, the mechanical strength may decrease or the thickness of the obtained solid electrolyte sheet may be small to cause a short-circuit between the positive electrode and the negative electrode. Therefore, the thickness is preferably not less than 0.5 µm and particularly preferably not less than 1 µm or not less than 3 µm.

When the surface of the α-alumina-containing precursor sheet is formed of a porous layer, the thickness of the porous layer is preferably not less than 5 µm, more preferably not less than 10 µm, particularly preferably not less than 30 µm, preferably not more than 499.5 µm, not more than 499 µm, not more than 497 µm, not more than 490 µm, not more than 450 µm, not more than 400 µm, not more than 300 µm, or not more than 150 µm. Thus, in the obtained solid electrolyte sheet, a porous solid electrolyte layer having a desired thickness can be formed.

The Na-containing material contains, for example, Na₂CO₃. The Na-containing material may further contain a Mg component (for example, MgO) or a Li component (for example, Li₂O) each of which functions as a stabilizer for beta-alumina. Specifically, the preferred composition of the Na-containing material is, in terms of % by mole of oxides, 35 to 100% (preferably 40 to 95% and more preferably 50 to 90%) Na₂O, and 0 to 65% (preferably 5 to 60% and more preferably 10 to 50%) MgO+Li₂O. If the content of Na₂O is too small, α-alumina is difficult to sufficiently turn into beta-alumina and, thus, a desired beta-alumina-based solid electrolyte sheet is difficult to obtain. The content of each of MgO and Li₂O is preferably 0 to 65%, more preferably 5 to 60%, and particularly preferably 10 to 50%. The Na-containing material may contain, in addition to the above components, ZrO₂ or Y₂O₂ that suppress abnormal grain growth of β-alumina and/or β"-alumina.

The form of the Na-containing material is not particularly limited and examples include a paste form and a powdered form. The paste form is preferred because the surface of the α-alumina-containing precursor sheet can be uniformly coated with it. Both the principal surfaces of the α-alumina-containing precursor sheet are preferably entirely coated with the Na-containing material. By doing so, throughout the entire α-alumina-containing precursor sheet, α-alumina can be easily turned into beta-alumina and, therefore, a desired beta-alumina-based solid electrolyte sheet can be easily obtained. However, only a portion of the surface of the α-alumina-containing precursor sheet (for example, only one principal surface thereof or only a portion of the principal surface) may be coated with the Na-containing material. The thickness of the coating layer may be appropriately selected to provide a desired beta-alumina-based solid electrolyte sheet and is, for example, preferably 5 to 200 µm, more preferably 10 to 100 µm, and particularly preferably 15 to 50 µm.

A polymer powder may be added to the Na-containing material. By doing so, a porous layer can be formed on the surface of the α-alumina-containing precursor sheet.

The content ratio between the Na-containing material powder and the polymer powder is, in terms of volume ratio, preferably 75:25 to 3:97, more preferably 60:40 to 6:94, and even more preferably 40:60 to 9:91.

The firing temperature is preferably 1400°C or higher, more preferably 1450°C or higher, and particularly preferably 1500°C or higher. If the firing temperature is too low, the α-alumina-containing precursor sheet is difficult to sufficiently turn into beta-alumina. On the other hand, the upper limit of the firing temperature is preferably not higher than 1750°C and particularly preferably not higher than 1700°C. If the firing temperature is too high, the amount of sodium component or the like vaporized from the Na-containing material becomes large, which tends to precipitate heterogeneous crystals and decrease the denseness of the sheet. As a result, the ionic conductivity of the obtained solid electrolyte sheet is likely to decrease. The firing time is appropriately adjusted to sufficiently turn the α-alumina-containing precursor sheet into beta-alumina. Specifically, the firing time is preferably 10 to 120 minutes and particularly preferably 20 to 80 minutes.

In the production method thus far described, an α-alumina-containing precursor sheet obtained by previous firing is used. Therefore, the α-alumina-containing precursor sheet during later firing after being coated with the Na-containing material is less likely to initiate contraction. Therefore, a beta-alumina-based solid electrolyte having excellent planarity can be easily obtained.

The solid electrolyte sheet according to the present invention is suitable for use in an all-solid-state sodium-ion secondary battery. The all-solid-state sodium-ion secondary battery is made up by including a positive electrode layer formed on one of the surfaces of the solid electrolyte sheet according to the present invention and a negative electrode layer formed on the other surface of the solid electrolyte sheet. The positive electrode layer and the negative electrode layer contain respective active materials. These active materials act as a positive-electrode active material and a negative-electrode active material, respectively, and can absorb and release sodium ions during charge and discharge.

The preferred positive-electrode active materials are triclinic crystals belonging to space group P1 or P-1 and, particularly, crystals represented by a general formula NaₓM_{y}P₂O₇ (where 1.2 ≤ x ≤ 2.8 and 0.95 ≤ y ≤ 1.6), because these crystals have high capacity, excellent chemical stability, and excellent cycle characteristics. A specific example of the crystals represented by the above general formula is Na₂FeP₂O₇. Examples other than the above include: layered sodium transition metal oxide crystals, such as NaCrO₂, Na_{0.7}MnO₂, and NaFe_{0.2}Mn_{0.4}Ni_{0.4}O₂; and Na₃V₂(PO₄)₃.

The type of the negative-electrode active material is not particularly limited and examples include: crystals containing at least one selected from Nb and Ti, and O; metallic crystals of at least one selected from Sn, Bi, and Sb; and other active material crystals. Graphite or hard carbon may be used as the negative-electrode active material. Alternatively, metallic sodium may be used.

The positive electrode layer and the negative electrode layer may be electrode mixture layers made of a composite of an active material and a solid electrolyte. The solid electrolyte acts as a sodium ion-conducting path in the electrode mixture and can therefore increase the discharge capacity and voltage of the battery.

Each of the positive electrode layer and the negative electrode layer preferably further contain a conductive agent. The conductive agent is a component to be added to the electrode layer for the purpose of achieving a capacity increase and high-rate charge and discharge of the electrode. Specific examples of the conductive agent include highly electrically conductive carbon blacks, such as acetylene black and Ketjen black, graphite, coke, and metal powders, such as Ni powder, Cu powder, and Ag powder. Among them, any of highly electrically conductive carbon blacks, Ni powder, and Cu powder is preferably used, which exhibit excellent electrical conductivity even when added in very small amount.

### [Example]

Hereinafter, the present invention will be described in detail with reference to examples, but the present invention is not at all limited to the following examples.

Tables 1 and 2 show Examples 1 to 4 of the present invention and Comparative Examples 1 and 2.

**[Table 1]**

| | | Ex. 1 | Ex. 2 | Ex. 3 | Ex. 4 |
|---|---|---|---|---|---|
| Thickness of α-Alumina-Containing Precursor Sheet [µm] | | 53 | 48 | 55 | 21 |
| Composition of Na-Containing Material (% by mole) | Na₂O | 77.5 | 55.5 | 85 | 77.5 |
| | Li₂O | | | 15 | |
| | MgO | 22.5 | 44.5 | | 22.5 |
| Thickness of Paste Coating [µm] | | 21 | 21 | 21 | 21 |
| Firing Temperature [°C] | | 1550 | 1550 | 1550 | 1550 |
| Sheet Thickness After Firing [µm] | | 89 | 86 | 91 | 38 |
| Precipitated Crystal | | (Al_{10.35}Mg_{0.65}O₁₆)(Na_{1.65}O) | (Al_{100.35}Mg_{0.65}O₁₆)(Na_{1.65}O) | Na_{1.49}Li_{0.25}Al_{10.76}O₁₇ | (Al_{10.35}Mg_{0.65}O₁₆)(Na_{1.65}O) |
| Surface Na₂O Concentration C₁[% by mole] | | 12.8 | 12.1 | 13 | 12.6 |
| Mid-Region Na₂O Concentration C₂[% by mole] | | 12.4 | 11.6 | 12.4 | 12.2 |
| C₁-C₂ [% by mole] | | 0.4 | 0.5 | 0.6 | 0.4 |
| Ionic Conductivity [S/cm] | | 5.2 | 4.2 | 4.3 | 5 |
| First Charge-Discharge Efficiency [%] | | 81 | 82 | 83 | 77 |
| Rapid Charge and Discharge Characteristics[%] | | 53 | 49 | 48 | 57 |

**[Table 2]**

| | | Comp. Ex. 1 | Comp. Ex. 2 |
|---|---|---|---|
| Thickness of α-Alumina-Containing Precursor Sheet [µm] | | - | - |
| Composition of Na-Containing Material (% by mole) | Na₂O | - | - |
| | Li₂O | - | - |
| | MgO | - | - |
| Thickness of Paste Coating | | - | - |
| Firing Temperature [°C] | | 1550 | 1550 |
| Sheet Thickness After Firing [µm] | | 92 | 40 |
| Precipitated Crystal | | (Al_{10.35}Mg_{0.65}O₁₆)(Na_{1.65}O) | (Al_{10.35}Mg_{0.65}O₁₆)Na_{1.65}O) |
| Surface Na₂O Concentration C₁[% by mole] | | 11.8 | - |
| Mid-Region Na₂O Concentration C₂[% by mole] | | 12.4 | - |
| C₁-C₂ [% by mole] | | -0.6 | |
| Ionic Conductivity [S/cm] | | 4.8 | - |
| First Charge-Discharge Efficiency [%] | | 74 | - |
| Rapid Charge and Discharge Characteristics[%] | | 40 | - |

### (1) Production of α-Alumina-Containing Precursor Sheet

Using polyvinyl butyral resin as a binder to be added to α-alumina powder (average particle diameter D50 = 2 µm), they were weighed to give a ratio of α-alumina powder to binder = 100:3 (mass ratio) and the mixture was dispersed into N-methylpyrrolidone, followed by well stirring with a planetary centrifugal mixer to form a slurry. The obtained slurry was applied onto a PET film using a doctor blade and dried at 70°C, thus obtaining a green sheet.

The obtained green sheet was fired at 1650°C for 30 minutes and both the surfaces thereof were wet-polished, thus obtaining a 53 µm thick α-alumina-containing precursor sheet.

### (2) Production of Solid Electrolyte Sheet

Na₂CO₃ powder and MgO powder were mixed to give a composition of 77.5% Na₂O and 22.5% MgO in terms of % by mole of oxides, thus obtaining a Na-containing material. An amount of 20 parts by mass of polyvinyl butyral resin was added to the obtained Na-containing material and N-methyl-2-pyrrolidone was added as a solvent to the mixture to give a concentration of mixed powder of 50% by mass. These materials were mixed with a planetary centrifugal mixer, thus making a Na-containing material paste.

The obtained Na-containing material paste was applied to both the surfaces of the α-alumina-containing precursor sheet obtained above and dried, thus forming a 21 µm thick Na-containing material layer on each of the surfaces. The α-alumina-containing precursor sheet with Na-containing material layers formed on both the surfaces was placed on a magnesia setter and fired at 1550°C for 30 minutes to react the α-alumina-containing precursor sheet with the Na-containing material. Thus, an 89 µm thick solid electrolyte sheet was obtained. When the obtained solid electrolyte sheet was analyzed by an XRD (powder X-ray diffractometer), diffraction lines originating from β"-alumina were confirmed.

The obtained solid electrolyte sheet was measured in terms of concentrations of Na₂O in the surface and the middle of the thickness direction and ionic conductivity by the following methods. The results are shown in Table 1.

The concentrations of Na₂O in the surface and the middle of the thickness direction of the solid electrolyte sheet were measured with an EDX (energy dispersive X-ray analyzer).

The ionic conductivity of the solid electrolyte sheet was measured in the following manner . A gold electrode was formed as an ion blocking electrode on a surface of the solid electrolyte sheet and, then, the electrode was measured within a frequency range of 1 to 10⁷ Hz by the AC impedance method to obtain a resistance value from a Cole-Cole plot. An ionic conductivity was calculated from the obtained resistance value. The measurement was conducted at 25°C.

### (3) Production of All-Solid-State Sodium-Ion Secondary Battery

### (a) Making of Solid Electrolyte Powder

β"-alumina (manufactured by Ionotec Ltd.) was ground in a ball mill and a planetary ball mill, thus obtaining a solid electrolyte powder having an average particle diameter of 0.3 µm.

### (b) Making of Positive-Electrode Active Material Precursor Powder

Using sodium metaphosphate (NaPO₃), ferric oxide (Fe₂O₃), and orthophosphoric acid (H₃PO₄) as raw materials, powders of these raw materials were formulated to give a composition of, in terms of % by mole, 40% Na₂O, 20% Fe₂O₃, and 40% P₂O₅. The powders of raw materials were melted in an air atmosphere at 1250°C for 45 minutes. Thereafter, the resultant melt was poured between a pair of rotating rollers and formed into a shape with rapid cooling, thus obtaining a film-like glass. The obtained film-like glass was ground in a ball mill and a planetary ball mill, thus obtaining a glass powder (a positive-electrode active material precursor powder) having an average particle diameter of 0.2 µm.

### (c) Production of Test Cell

The positive-electrode active material precursor powder obtained above, the solid electrolyte powder obtained above, and acetylene black (SUPER C65 manufactured by TIMCAL) as a conductive agent were weighed to reach 83% by mass, 13% by mass, and 4% by mass, respectively, and mixed with an agate pestle in an agate mortar. An amount of 20 parts by mass of polypropylene carbonate was added to 100 parts by mass of the obtained mixed powder and 110 parts by mass of N-methyl-pyrrolidinone was further added to the mixture, followed by well stirring with a planetary centrifugal mixer, thus obtaining an electrode paste.

The obtained electrode paste was applied, with an area of 1 cm² and a thickness of 300 µm, to one surface of the solid electrolyte sheet obtained above and then dried at 70°C for four hours, thus forming a positive-electrode material layer. In this state, the positive-electrode material layer was fired at 500°C for 30 minutes in a mixed gas of 4% by volume H₂ and 96% by volume N₂, thus forming a 150 µm thick positive electrode layer on the one surface of the solid electrolyte layer. All the above operations were performed in an environment with a dew point of -40°C or lower.

When the powder X-ray diffraction pattern of the obtained positive electrode layer was checked, Na₂FeP₂O₇ crystals were confirmed. In the obtained positive electrode layer, crystalline diffraction lines originating from the solid electrolyte powder used were confirmed.

Next, a current collector formed of a 300-nm thick gold electrode was formed on the surface of the obtained positive electrode layer, using a sputtering device (stock number "SC-701AT" manufactured by Sanyu Electron Co., Ltd.). Thereafter, in an argon atmosphere with a dew point of -60°C or lower, metallic sodium serving as a counter electrode was pressure-bonded to the other surface of the solid electrolyte layer, and the obtained laminate was placed on a lower lid of a coin cell and then covered with an upper lid, thus producing a CR2032-type test cell.

### (d) Evaluations of Battery Characteristics

The produced test cell underwent a charge and discharge test at 60°C to evaluate its first charge-discharge efficiency and rapid charge and discharge characteristics. The first charge-discharge efficiency was evaluated as a ratio of the first discharge capacity to the first charge capacity when charge and discharge were conducted at a C rate of 0.05 C. The rapid charge and discharge characteristics were evaluated as a ratio of the first discharge capacity when charge and discharge were conducted at a C rate of 0.1 C to the first discharge capacity when charge and discharge were conducted at a C rate of 0.05 C. The results are shown in Table 1.

### (Example 2)

A solid electrolyte sheet was produced in the same manner as in Example 1 except that, in the composition of the Na-containing material, Na₂CO₃ powder and MgO powder were mixed to give a composition of 55.5% Na₂O and 44.5% MgO in terms of % by mole of oxides, and the solid electrolyte sheet was evaluated in terms of each of the characteristics described previously. Furthermore, a test cell was produced in the same manner as in Example 1 using the produced solid electrolyte sheet and evaluated in terms of the battery characteristics. The results are shown in Table 1.

### (Example 3)

A solid electrolyte sheet was produced in the same manner as in Example 1 except that, in the composition of the Na-containing material, Na₂CO₃ powder and Li₂O powder were mixed to give a composition of 85% Na₂O and 15% Li₂O in terms of % by mole of oxides, and the solid electrolyte sheet was evaluated in terms of each of the characteristics described previously. Furthermore, a test cell was produced in the same manner as in Example 1 using the produced solid electrolyte sheet and evaluated in terms of the battery characteristics. The results are shown in Table 1.

### (Example 4)

A solid electrolyte sheet was produced in the same manner as in Example 1 except that after the green sheet was fired, both the surfaces of the green sheet were wet-polished to obtain a 21 µm thick α-alumina-containing precursor sheet, and the solid electrolyte sheet was evaluated in terms of each of the characteristics described previously. Furthermore, a test cell was produced in the same manner as in Example 1 using the produced solid electrolyte sheet and evaluated in terms of the battery characteristics. The results are shown in Table 1.

### (Comparative Example 1)

### (a) Preparation of Slurry

Using sodium carbonate (Na₂CO₃), aluminum oxide (Al₂O₃), magnesium oxide (MgO), zirconium oxide (ZrO₂), and yttrium oxide (Y₂O₃) as raw materials, a raw material powder was prepared to have a composition of, in terms of % by mole, 14.2% Na₂O, 75.4% Al₂O₃, 5.4% MgO, 4.9% ZrO₂, and 0.1% Y₂O₃. Next, these powdered raw materials were wet-mixed for four hours using ethanol as a medium. After ethanol was evaporated from the mixture, using polyvinyl butyral resin as a binder, the α-alumina powder and the binder were weighed to give a ratio of α-alumina powder to binder = 100:3 (mass ratio) and the mixture was dispersed into N-methylpyrrolidone, followed by well stirring with a planetary centrifugal mixer to form a slurry. The slurry obtained above was applied onto a PET film using a doctor blade and dried at 70°C, thus obtaining a 113 µm thick green sheet.

The obtained green sheet was placed on a magnesia setter and fired at 1550°C for 30 minutes, thus obtaining a 92 µm thick solid electrolyte sheet. When the obtained solid electrolyte sheet was analyzed by an XRD (powder X-ray diffractometer), diffraction lines originating from β"-alumina were confirmed.

The obtained solid electrolyte sheet was evaluated in terms of each of the characteristics in the same manners as in Example 1. Furthermore, a test cell was produced in the same manner as in Example 1 using the produced solid electrolyte sheet and evaluated in terms of the battery characteristics. The results are shown in Table 1.

### (Comparative Example 2)

When the solid electrolyte sheet obtained in Comparative Example 1 was dry-polished to a thickness of 40 µm, cracks were produced therein. Therefore, the polished solid electrolyte sheet could not be used to evaluate the battery characteristics.

### [Industrial Applicability]

The solid electrolyte sheet according to the present invention is suitable for sodium-ion secondary batteries for use in portable electronic devices, electric vehicles, electric power tools, backup emergency power supplies, and so on.

## Claims

1. A solid electrolyte sheet containing β-alumina and/or β"-alumina, the solid electrolyte sheet satisfying C₁ > C₂ where C₁ represents a concentration of Na₂O in a surface of the solid electrolyte sheet and C₂ represents a concentration of Na₂O in a middle of a thickness direction of the solid electrolyte sheet.

2. The solid electrolyte sheet according to claim 1, satisfying C₁-C₂ ≥ 0.1% by mole.

3. The solid electrolyte sheet according to claim 1 or 2, having a thickness of 500 µm or less.

4. The solid electrolyte sheet according to any one of claims 1 to 3, containing, in terms of % by mole, 65 to 98% Al₂O₃, 2 to 20% Na₂O, 0.3 to 15% MgO+Li₂O, 0 to 20% ZrO₂, and 0 to 5% Y₂O₃.

5. The solid electrolyte sheet according to any one of claims 1 to 4, being used in an all-solid-state sodium-ion secondary battery.

6. An all-solid-state sodium secondary battery comprising the solid electrolyte sheet according to claim 5.

7. A method for producing the solid electrolyte sheet according to any one of claims 1 to 5, the method comprising the steps of:
preparing a precursor sheet containing α-alumina; and
coating a surface of the precursor sheet with an Na-containing material and then firing the precursor sheet.

8. The method for producing the solid electrolyte sheet according to claim 7, wherein the Na-containing material contains Na₂CO₃.
